# EUROPEAN PATENT SPECIFICATION

(11) **EP 3 023 541 B1**
(45) Date of publication and mention of the grant of the patent: **03.10.2018**
(21) Application number: 15179301.5
(22) Date of filing: 31.07.2015
(51) Int. Cl.: D21D 5/16, D21B 1/34, D21D 5/04

(54) **PAPERMAKING STRAINER AND MANUFACTURING METHOD OF PAPERMAKING STRAINER**
PAPIERHERSTELLUNGSSIEB UND HERSTELLUNGSVERFAHREN DES PAPIERHERSTELLUNGSSIEBES
TAMIS POUR LA FABRICATION DU PAPIER ET PROCÉDÉ DE FABRICATION D'UN TAMIS POUR LA FABRICATION DU PAPIER

(30) Priority: 21.11.2014 JP 2014236091
(43) Date of publication of application: 25.05.2016
(73) Proprietor: Aikawa Iron Works Co., Ltd., Shizuoka-shi, Shizuoka 420-0858 (JP)
(72) Inventor: Aikawa, Masaki, Shizuoka, Shizuoka (JP)
(74) Representative: Schwabe - Sandmair - Marx

(56) References cited:
- EP-A1- 0 079 811
- EP-A1- 0 479 203
- EP-A1- 1 895 046
- DE-A1- 3 721 207
- DE-A1- 10 248 260
- US-B1- 6 254 729

## Description

### Background of the Invention and Related Art Statement

The present invention relates to a papermaking strainer, and a manufacturing method of the papermaking strainer, and especially; relates to the papermaking strainer wherein a disintegration of a paper material is accelerated, and the manufacturing method of the papermaking strainer.

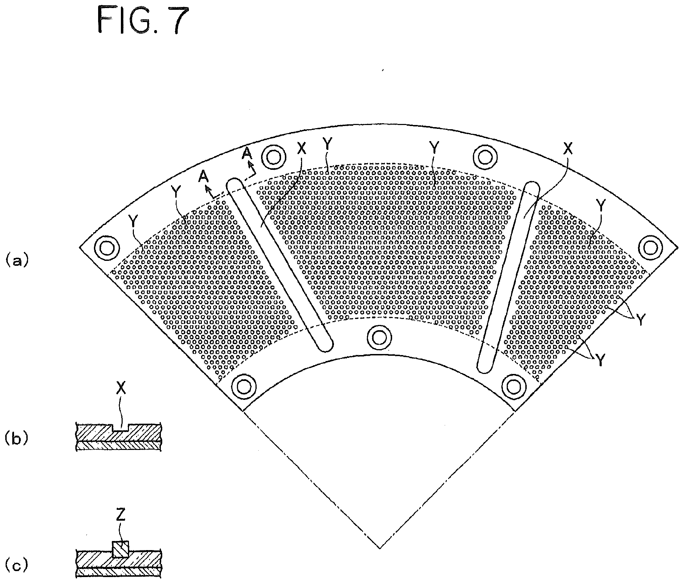

Conventionally, as for a papermaking strainer disposed in proximity to a rotating rotor, and sieving a disintegrated paper material, there is a papermaking strainer shown in Figs. 7 (a) and 7 (b).

In the papermaking strainer, on a strainer face having an approximately doughnut shape facing the rotor, there is provided a plurality of concave grooves X reaching an outer peripheral portion from an inner peripheral portion of the approximately doughnut shape, and there is provided a multitude of strainer holes Y between adjacent concave grooves X of the plurality of concave grooves X (commonly called "a diff groove type").

Also, there is a papermaking strainer provided with a projection Z shown in Fig. 7(c) in place of the concave groove X (commonly called a "cutter type". For example, disclosed in Japanese Unexamined Patent Application Publication Nos. H02-71989 and 862-132759).

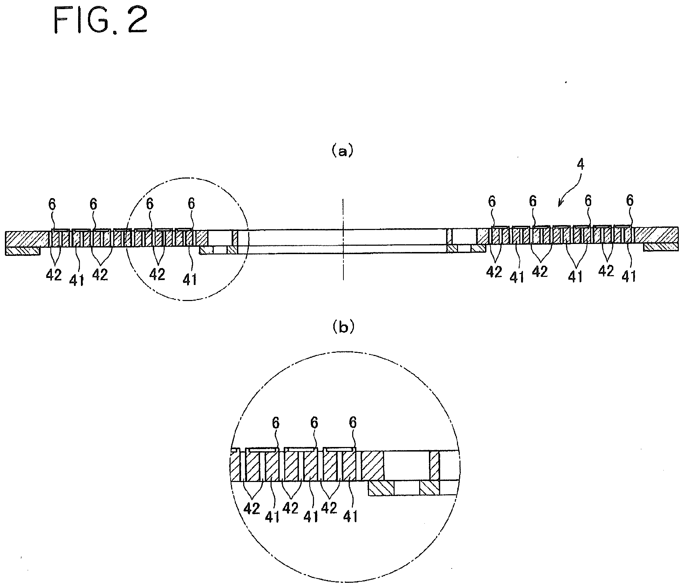

As for a papermaking strainer further increasing a disintegration property of pulpers of the aforementioned diff groove type and cutter type, there is a papermaking strainer disclosed in Japanese Utility Model No. 2515808 (see Fig. 2) (commonly called a "round-hole groove type").

Document US 6,254,729 B1 discloses a pulper for pulping a fiber suspension including a vessel, an extraction plate assembly and a rotor. The extraction plate assembly is disposed within the vessel and includes a metal plate with a plurality of holes extending therethrough. A plurality of metal inserts are respectively disposed within the holes and project from the plate. Each insert is removably attached to the plate. A rotor is disposed within the vessel adjacent to the extraction plate assembly. The inserts are removably attached to the plate by brazing the inserts within the holes, or slightly shrinking the inserts using liquid nitrogen and placing the inserts in the holes.

Document DE 102 48 260 A1 discloses a shredder assembly processing cellular material and recycled paper for re-use. The assembly has a sieve operating in conjunction with a rotor with arms supported by a main frame. The main frame especially is of rectangular cross section. Both the sieve and the rotor arm have hard metal cutting edges. The rotor arm is detachable from the frame. Both the hard metal components on the sides directed against the rotation, and the hard metal surfaces on the sieve, form a one-piece structure with the frame. Also claimed is a commensurate shredding tool. In a further embodiment, those faces directed against the direction of rotation have a number of hard metal elements that meet the requirements of different rotor shapes. The same kind of hard metal is used on both sides of the supporting frame.

Document EP 0 479 203 A1 discloses a strainer for paper making capable of accomplishing maceration and screening of a paper feedstock with high efficiency and being simplified in structure and manufacturing. The strainer is arranged in proximity to a rotor and formed with a plurality of recesses on a surface thereof opposite to the rotor. Also, a screening apparatus for paper making which uses such a strainer is disclosed.

Document EP 1 895 046 A1 discloses a pulper for fibre suspensions comprising a vat containing a rotor and a screen plate positioned near the place of the rotor. The plate has two rows of intersecting grooves which form raised sections and recesses where they intersect. These contain bores which pass through the plate. Independent claims are included for: (A) for screen plates as described; and (B) a method for making them by cutting two rows of parallel grooves which intersect in the plate and then boring holes through the raised sections and recesses formed.

Document DE 37 21 207 A1 discloses a perforated plate for wire drums. The plate openings are either round or consist of longitudinal slits and the plate is either completely flat with ribs, combs, grooves or similar. At least a proportion of the wire surfaces are equipped with a hard surface layer achieved through diffusion coating.

Document EP 0 079 811 A1 discloses a device for purifying liquid suspensions of fibres such as papermaking pulps. It comprises a screen equipped with grooves which have a radial wall substantially perpendicular to the liquid velocity component which is tangential to the screen, the holes in the screen being perforated at the bottom of the said groove along the said radial wall, the width of the opening of the groove being several times greater than the diameter of the holes.

The papermaking strainer disclosed in the Japanese Utility Model No. 2515808 forms a plurality of concave portions having a different size on a strainer face facing the rotor, and a multitude of strainer holes is bored by being dispersed and opened on an entire surface including the concave portions.

However, even in the papermaking strainer disclosed in the aforementioned Japanese Utility Model No. 2515808, the disintegration property is not sufficient, so that in a current condition, a shape having many cutting lengths and crossing frequencies and the like are required.

The present invention is made in view of the aforementioned current condition, and an object of the present invention is to provide a papermaking strainer wherein the disintegration of the paper material is accelerated; and a manufacturing method of the papermaking strainer.

Further objects and advantages of the invention will be apparent from the following description of the invention.

### Summary of the Invention

A papermaking strainer according to the first aspect disposed in proximity to a rotating rotor, for sieving a disintegrated paper material comprises a plurality of strainer holes provided on a surface of a strainer adapted to face the rotor, and a plurality of peripheral walls protruding from the strainer to surround the plurality of strainer holes.

Also, as for the papermaking strainer according to a second aspect, in the papermaking strainer according to the first aspect, each peripheral wall of the plurality of peripheral walls surrounds a periphery of each strainer hole or strainer holes of the plurality of strainer holes.

Also, as for the papermaking strainer according to a third aspect, in the papermaking strainer according to the first or second aspect, the plurality of peripheral walls has an annular shape in a plan view, and the plurality of strainer holes is formed on the surface of the strainer not only at an inner side of the peripheral wall, but also at an outer side of the peripheral wall.

Also, a manufacturing method of the papermaking strainer according to a fourth aspect comprises a boring step for boring a plurality of strainer holes on a surface of the strainer, and a peripheral-wall forming step, after the boring step, for forming the plurality of peripheral walls to surround peripheries of plurality of the strainer holes from a material having a hardness harder than that of the strainer.

Also, the manufacturing method of the papermaking strainer according to a fifth aspect comprises a peripheral-wall forming step for forming a plurality of peripheral walls on a surface of the strainer from a material having a hardness harder than that of the strainer, and a boring step, after the peripheral-wall forming step, for boring at least one strainer hole on the surface of the strainer at an inner side of the peripheral wall while avoiding boring the peripheral wall on the surface of the strainer.

According to the papermaking strainer with respect to the first aspect, the paper material can be disintegrated by holding the paper material inside the peripheral wall, and there is provided the plurality of strainer holes on the surface of the strainer facing the rotor. Also, there is formed the plurality of peripheral walls to surround the peripheries of the strainer holes, so as to increase crossing lengths between the rotor and the peripheral walls more than a conventional technology. Also, the peripheral wall is formed finely so as to increase a crossing frequency relative to the rotor and improve a disintegration property.

Also, according to the papermaking strainer with respect to the third aspect, in addition to effects of the invention according to the aforementioned first aspect or second aspect, the peripheral wall is annularly formed in the plan view, and the plurality of strainer holes is formed on the surface of the strainer, not only at an inner side of the peripheral wall but also at an outer side of the peripheral wall so as to provide many strainer holes. Also, a turbulent flow is generated not only inside the peripheral wall but also outside the peripheral wall, i.e., a turbulent flow area increases so as to accelerate the disintegration of the paper material further.

Also, according to the manufacturing method of the papermaking strainer with respect to the fourth aspect, the paper material can be disintegrated by holding the paper material inside the peripheral wall. Also, there is provided the plurality of strainer holes on the surface of the strainer facing the rotor, and there is formed the plurality of peripheral walls to surround the peripheries of the strainer holes so as to increase the crossing lengths between the rotor and the peripheral walls more than the conventional technology. Also, the peripheral wall is formed finely so as to increase the crossing frequencies relative to the rotor and improve the disintegration property. Also, the peripheral wall is formed by the material having the hardness harder than that of the strainer so as to prevent the damage by the paper material sent out by the rotor.

Also, according to the manufacturing method of the papermaking strainer with respect to the fifth aspect, the paper material can be disintegrated by holding the paper material inside the peripheral wall. Also, there is provided the plurality of strainer holes on the surface of the strainer facing the rotor, and there is formed the plurality of peripheral walls to surround the peripheries of the strainer holes so as to increase the crossing lengths between the rotor and the peripheral walls more than the conventional technology. Also, the peripheral wall is formed finely so as to increase the crossing frequencies relative to the rotor and improve the disintegration property, and the peripheral wall is formed by the material having the hardness harder than that of the strainer so as to prevent the damage by the paper material sent out by the rotor.

### Brief Description of the Drawings

Fig. 1 is a schematic cross-sectional view of a pulper adopting a papermaking strainer of one embodiment of the present invention.
Fig. 2(a) is a schematic enlarged cross-sectional view of the papermaking strainer in Fig. 1, and Fig. 2(b) is a schematic partially enlarged cross-sectional view of the papermaking strainer showing one portion in Fig. 2(a) being enlarged.
Fig. 3(a) is a schematic partial plan view showing one portion of the papermaking strainer in Fig. 1, and Fig. 3(b) is a schematic partially enlarged plan view of the papermaking strainer showing one portion in Fig. 3(a) being enlarged.
Fig. 4(a) is a schematic partial plan view of another embodiment of the papermaking strainer in Fig. 3(a), and Fig. 4(b) is a schematic partially enlarged plan view of the papermaking strainer showing one portion in Fig. 4(a) being enlarged.
Fig. 5 is a schematic partial plan view of another embodiment of the papermaking strainer in Fig. 4(b).
Fig. 6 is a schematic partial plan view of another embodiment of the papermaking strainer in Fig. 5.
Fig. 7(a) is a schematic partially enlarged plan view of a conventional papermaking strainer, Fig. 7(b) is a schematic cross-sectional view taken along a line A-A in Fig. 7(a), and Fig. 7(c) is a schematic cross-sectional view of the conventional papermaking strainer different from Fig. 7(b).
Fig. 8 is a schematic cross-sectional view of the pulper adopting the papermaking strainer of one embodiment of the present invention.
Fig. 9(a) is a schematic enlarged cross-sectional view of the papermaking strainer in Fig. 8, Fig. 9(b) is a schematic partially enlarged cross-sectional view of the papermaking strainer showing one portion in Fig. 8(a) being enlarged, Fig. 9(c) is a schematic partially enlarged perspective view of the papermaking strainer showing one portion in Fig. 8(a) being enlarged, and Fig. 9(d) is a schematic cross-sectional view of Fig. 9(c).
Fig. 10(a) is a schematic partial plan view showing one portion of the papermaking strainer in Fig. 8, and Fig. 10(b) is a schematic partially enlarged plan view of the papermaking strainer showing one portion in Fig. 10(a) being enlarged.
Fig. 11(a) is a schematic partial plan view of another embodiment of the papermaking strainer in Fig. 10(a), and Fig. 11(b) is a schematic partially enlarged plan view of the papermaking strainer showing one portion in Fig. 11(a) being enlarged.
Fig. 12 is a schematic partial plan view of another embodiment of the papermaking strainer in Fig. 11(b).
Fig. 13 is a schematic partial plan view of another embodiment of the papermaking strainer in Fig. 12.

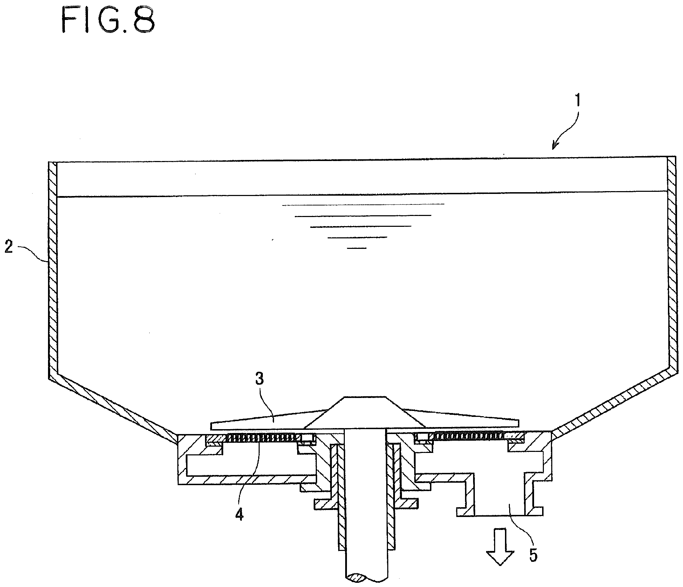

The embodiments according to Fig. 8 to 13 do not fall under the scope of the claims.

### Detailed Description of Preferred Embodiments

A papermaking strainer and a manufacturing method of the papermaking strainer of one embodiment of the present invention will be explained with reference to the drawings.

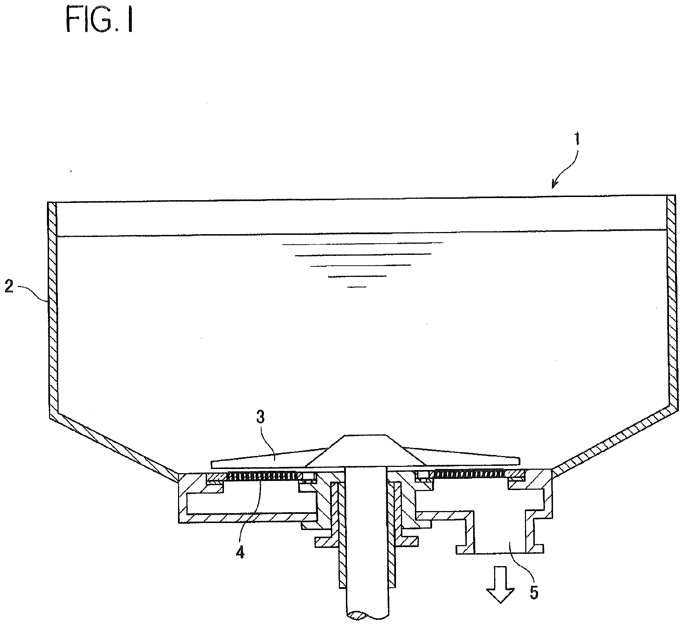

In Fig. 1, the reference numeral 1 represents a pulper which disintegrates a papermaking raw material (hereinafter referred to as a "paper material") such as a used paper and the like, and the pulper 1 causes a vortex flow in a water by a rotor 3 which rotates inside a tank 2, and by that action thereof, disintegrates the paper material.

A useful fiber in a disintegrated papermaking raw material passes through a papermaking strainer 4 provided in proximity to the rotor 3, and is guided to the outside of the tank 2 from an outlet 5.

Namely, the papermaking strainer 4 is disposed in proximity to the rotating rotor 3, and sieves the disintegrated paper material.

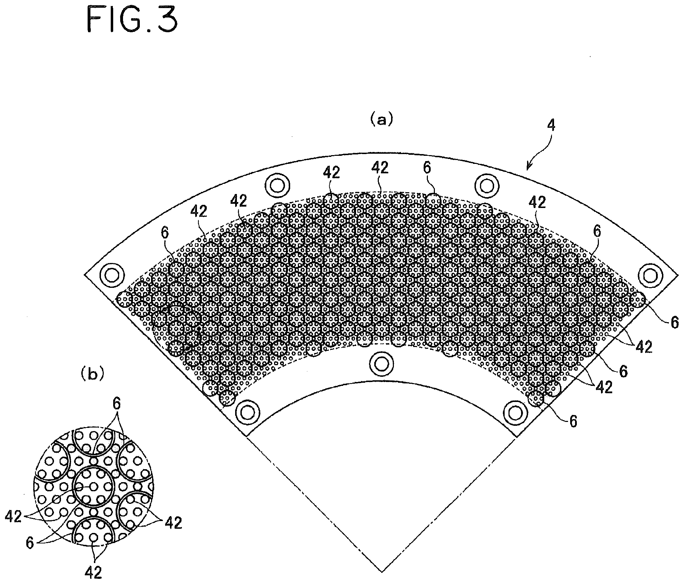

As shown in Figs. 2(a) and 2(b), on a surface of a strainer 41 facing the rotor 3, there is provided a plurality of strainer holes 42. The strainer 41 is formed by, for example, stainless cast steel, and there are formed peripheral walls 6 surrounding peripheries of the strainer holes 42 (see Figs. 3(a) and 3(b)).

According to the aforementioned papermaking strainer 4, the paper material can be disintegrated by holding the paper material inside the peripheral walls 6. Also, the paper material collides with the peripheral walls 6 so as to cause a turbulent flow near the peripheral walls 6.

Namely, even if the paper material has a high raw material concentration, the paper material can be easily disintegrated by a baffling effect caused by the peripheral walls 6.

Accordingly, the high raw material concentration can pass through, and a passing quantity (a throughput) can increase.

Namely, a unit throughput increases, and a power source unit becomes excellent, so that an energy-saving effect can be expected.

The raw material is disintegrated by the peripheral walls 6 more than a papermaking strainer with a conventional technology, so that a diameter of the strainer hole 42 can be reduced.

As a result, when the raw material passes through the strainer hole 42, impurities such as refuse and the like contained in the raw material can be removed more so as to improve a fine selection effect of the papermaking strainer 4.

In a case wherein the same quantity of throughput as the conventional technology is processed, a rotation frequency of the rotor 3 and the like can slow down, so that the energy-saving effect can be expected.

Also, for a portion wherein the rotation becomes slower, a life of a rotary cutter of the rotor 3 and the like can be prolonged so as to reduce an economical cost of a user.

A plurality of peripheral walls 6 is provided in the papermaking strainer 4, and additionally, a peripheral length of the narrow peripheral wall 6 is formed long so as to increase a crossing length relative to the rotor 3 more than the conventional technology.

Also, the peripheral wall 6 is formed finely, so that a crossing frequency relative to the rotor 3 can increase. Accordingly, a disintegration property can improve more than the conventional technology.

Also, for a portion wherein the peripheral wall 6 can be formed with a narrow width (for example, a width of the peripheral wall 6 is smaller than a diameter of the papermaking strainer 4 in a plan view), a manufacturing cost of the papermaking strainer 4 can be reduced as well.

Also, the paper material can be cut by forming a sharp edge portion or a right-angled corner portion (see Figs. 2(a) and 2(b)) in a cross-sectional shape crossing in a longitudinal direction of the peripheral wall 6.

However, it is preferable to form the plurality of peripheral walls 6 by a material having a hardness harder than that of the strainer 41 (for example, tungsten carbide). The peripheral wall 6 is formed by the material having the hardness harder than that of the strainer 41 so as to prevent damage by the paper material sent out by the rotor 3.

For example, as shown in Figs. 3(a) and 3(b), the peripheral wall 6 is annularly formed in a plan view, and on the surface of the strainer 41, the plurality of strainer holes 42 is formed not only inside the peripheral wall 6, but also outside the peripheral wall 6.

As a result, many strainer holes 42 can be provided, and the turbulent flow is generated not only inside the peripheral wall 6, but also outside the peripheral wall 6. Namely, a turbulent flow area increases so as to accelerate a disintegration of the paper material further.

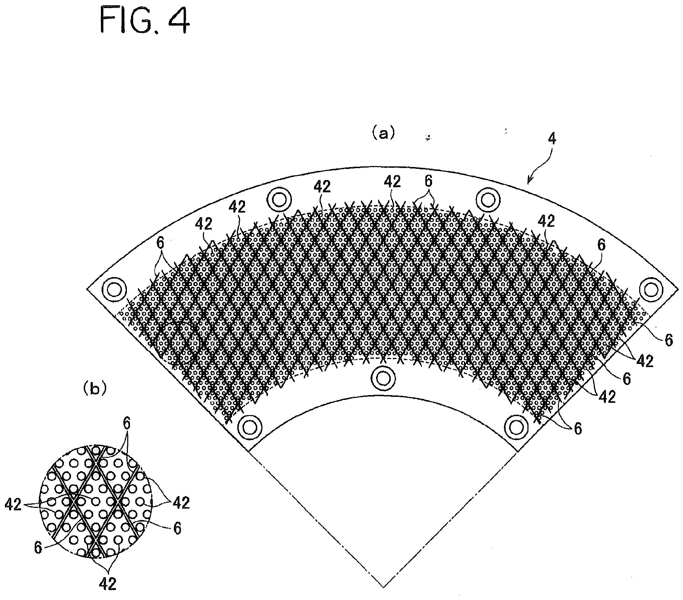

Incidentally, the present embodiment disclosed the peripheral wall formed in a circle (see Figs. 3(a) and 3(b)) in the plan view; however, the peripheral wall of the present invention, not being limited to the circle, may be formed in an oval or a rectangular shape. Also, as shown in Figs. 4(a) and 4(b), the peripheral wall 6 may be formed by surrounding the peripheries of the strainer holes 42 with a linear shape.

Also, the width of the peripheral wall 6 is narrower than the peripheral length of the peripheral wall 6. The width of the peripheral wall 6 has an appropriate value, and for example, the width of the peripheral wall 6 is preferably between 0.5 mm and 10 mm, and more preferably around 2 mm.

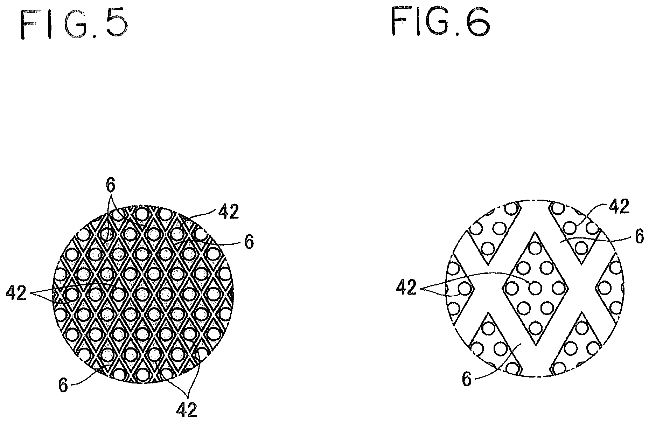

Incidentally, the width of the peripheral wall 6 is smaller than the diameter of the strainer hole 42 (see Figs. 3(a) and 3(b), Figs. 4(a) and 4(b), and Fig. 5); however, in the present invention, it is not limited to the above, and as shown in Fig. 6, the width of the peripheral wall 6 may be larger than the diameter of the strainer hole 42.

Also, the plurality of peripheral walls 6 is formed, so that the paper material collides with the peripheral walls 6 so as to cause turbulent flows between adjacent peripheral walls 6 so as to accelerate the disintegration of the paper material further.

In the aforementioned embodiment, the plurality of strainer holes 42 surrounded by the peripheral walls 6 is provided (see Figs. 3(a) and 3(b), Figs. 4(a) and 4(b), and Fig. 6); however, in the present invention, it is not limited to the above, and as shown in Fig. 5, the periphery of one strainer hole 42 may be surrounded by the peripheral walls 6.

The aforementioned papermaking strainer 4 can be manufactured in the following manner.

The plurality of strainer holes 42 is bored on the surface of the strainer (for example, stainless cast steel) 4 (a boring process).

After the boring process, a material having a hardness harder than that of the strainer 4 (for example, tungsten carbide) is attached (an attachment is, for example, build-up welding) to the surface of the strainer 4 around the strainer hole 42 to form the plurality of peripheral walls 6 (a peripheral-wall forming process) so as to manufacture the papermaking strainer 4.

According to the aforementioned manufacturing method of the papermaking strainer, the peripheral wall 6 provided around the strainer hole 42 is formed by the material having the hardness harder than that of the strainer 4 so as to prevent the damage by the paper material sent out by the rotor 3. Also, the turbulent flow is generated near the peripheral wall 6 so as to accelerate the disintegration of the paper material. Also, for the portion wherein the peripheral wall 6 can be formed with the narrow width, the manufacturing cost of the papermaking strainer 4 can be reduced as well.

In the aforementioned manufacturing method of the papermaking strainer, after the boring process, the peripheral-wall forming process is carried out; however, in the present invention, even if the boring process is carried out after the peripheral-wall forming process, the aforementioned same effect can be obtained.

Namely, on the surface of the strainer (for example, stainless cast steel) 41, the material (for example, tungsten carbide) having the hardness harder than that of the strainer 41 is attached (the attachment is, for example, the build-up welding) to the surface of the strainer 41 to form the plurality of peripheral walls 6 having the narrow width (the peripheral-wall forming process).

After the peripheral-wall forming process, a singular or plurality of strainer holes 42 is bored (the boring process) on an inward side of the peripheral wall 6 by avoiding the peripheral walls 6 on a strainer 41 face so as to manufacture the papermaking strainer 4.

Incidentally, in the present embodiment, a case wherein the papermaking strainer 4 is adopted to the pulper has been explained; however, the papermaking strainer 4 of the present invention is not limited to the above, and can be applied to a foreign material separation apparatus for papermaking such as a screen and the like for processing the papermaking raw material including a not-yet-disintegrated piece and a foreign material (a metal piece, a stone, and a plastic piece) to obtain a finely selected useful fiber.

The foreign material separation apparatus for papermaking provides a flat-plate-shaped or cylindrical separator including a plurality of holes in proximity to the rotating rotary member, and separates the paper material passing through the holes from a foreign material which does not pass through. In the aforementioned embodiment, the rotary member is, for example, the rotor 3; the flat-plate-like separator is, for example, the strainer 41; and the cylindrical separator is, for example, a screen 2 having a cylindrical shape in Japanese Patent No. 4909693.

In a case wherein the peripheral wall 6 having the narrow width in the same manner as above is formed around the plurality of holes of the separator, and a plurality of peripheral walls 6 having the narrow width is formed by a material having a hardness harder than that of the separator in the same manner as above, and the peripheral walls having the narrow width are linearly formed, the width of the peripheral wall is thinner than the length of the periphery of the peripheral wall, or in a case wherein the peripheral wall having the narrow width is formed in an approximately annular shape, the width of the peripheral wall may be thinner than a length in a longitudinal direction of the approximately annular shape of the peripheral wall.

Even in the aforementioned foreign material separation apparatus for papermaking, the paper material can be disintegrated by holding the paper material inside the peripheral wall. Also, the plurality of holes is provided on a surface of the separator facing the rotor, and the plurality of peripheral walls surrounding the peripheries of the holes is formed so as to increase crossing lengths between the rotor and the peripheral walls more than the conventional technology. Also, the peripheral walls are formed finely so as to increase the crossing frequencies relative to the rotor so as to improve the disintegration property more than the conventional technology.

In the aforementioned embodiment, there is formed a singular or plurality of peripheral walls 6 surrounding the peripheries of the strainer holes 42; however, in the present invention, it is not limited to the above, and there may be formed a singular or plurality of peripheral concaved groove portions 6' surrounding the peripheries of the strainer holes 42 with concaved grooves.

Namely, in Fig. 8, the reference numeral 1 represents the pulper which disintegrates the papermaking raw material (hereinafter referred to as the "paper material") such as the used paper and the like, and the pulper 1 causes the vortex flow in the water by the rotor 3 rotating inside the tank 2, and by that action thereof, disintegrates the paper material.

The useful fiber in the disintegrated papermaking raw material passes through the papermaking strainer 4 provided in proximity to the rotor 3, and is guided to the outside of the tank 2 from the outlet 5.

Namely, the papermaking strainer 4 is disposed in proximity to the rotating rotor 3, and sieves the disintegrated paper material.

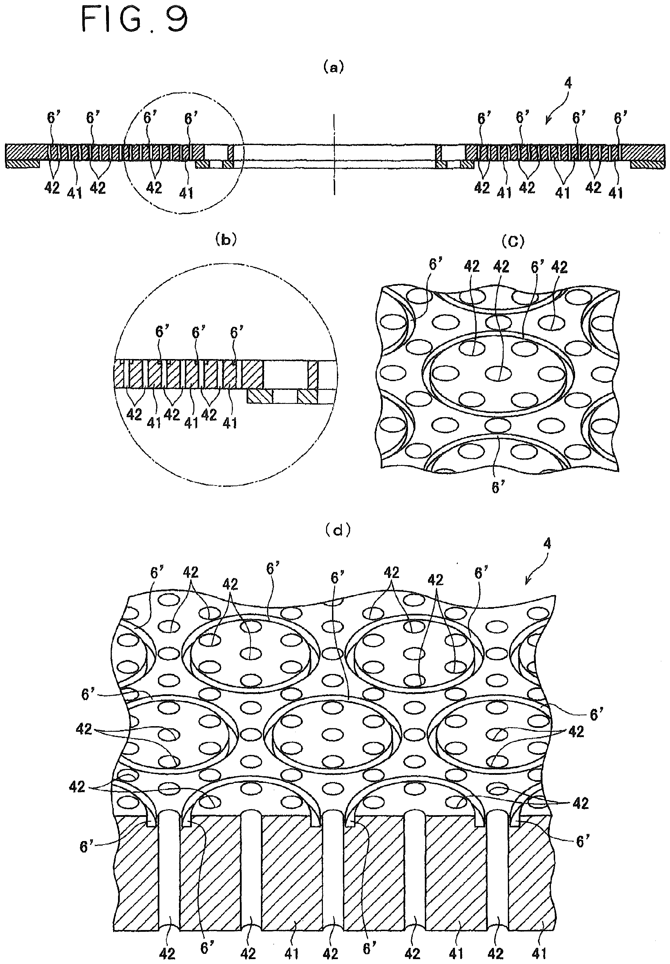

As shown in Figs. 9(a) to 9(d), on the surface of the strainer 41 facing the rotor 3, there is provided the plurality of strainer holes 42. The strainer 41 is formed by, for example, stainless cast steel, and there are formed the peripheral concaved groove portions 6' surrounding the peripheries of the strainer holes 42 with the concaved grooves (see Figs. 9(a) to 9(d)).

According to the aforementioned papermaking strainer 4, when the rotor 3 crosses the peripheral concaved groove portions 6', turbulent flows are generated near the peripheral concaved groove portions 6', and the disintegration of the paper material can be accelerated by many turbulent flows. Also, the plurality of strainer holes 42 is provided on the surface of the strainer 41 facing the rotor 3, and there is formed the plurality of peripheral concaved groove portions 6' surrounding the peripheries of the strainer holes 42 with the concaved grooves so as to increase crossing lengths between the rotor 3 and the peripheral concaved groove portions 6' more than the conventional technology. Also, the peripheral concaved groove portions 6' are formed finely so as to increase the crossing frequencies relative to the rotor 3, and improve the disintegration property more than the conventional technology.

Namely, even if the paper material has the high raw material concentration, the paper material can be easily disintegrated by a baffling effect caused by the peripheral concaved groove portions 6'.

Accordingly, the high raw material concentration can pass through so as to increase the passing quantity (the throughput).

Namely, the unit throughput increases, and the power source unit becomes excellent, so that the energy-saving effect can be expected.

The raw material is disintegrated by the peripheral concaved groove portions 6' more than the conventional technology, so that the diameter of the strainer hole 42 can be reduced.

As a result, when the raw material passes through the strainer hole 42, the impurities such as the refuse and the like contained in the raw material can be removed more so as to improve the fine selection effect of the papermaking strainer 4.

In the case wherein the same quantity of the throughput as that in the conventional technology is processed, the rotation frequency of the rotor 3 and the like can slow down, so that the energy-saving effect can be expected.

Also, for the portion wherein the rotation becomes slower, the life of the rotary cutter of the rotor 3 and the like can be prolonged so as to reduce the economical cost of a user.

The plurality of peripheral concaved groove portions 6' is provided in the papermaking strainer 4, and additionally, the peripheral length of the narrow peripheral concaved groove portions 6' is formed long so as to increase the crossing lengths relative to the rotor 3 more than those in the conventional technology.

Also, the peripheral concaved groove portion 6' is formed finely, so that the crossing frequencies relative to the rotor 3 can increase. Accordingly, the disintegration property can improve more than that in the conventional technology.

Also, for a portion wherein the peripheral concaved groove portion 6' can be formed with the narrow width (for example, a width of the peripheral concaved groove portion 6' is formed to be smaller than the diameter of the papermaking strainer 4 in a plan view), the manufacturing cost of the papermaking strainer 4 can be reduced as well.

Also, the paper material can be cut by forming the sharp edge portion or the right-angled corner portion (see Figs. 2(a) and 2(b)) in a cross-sectional shape crossing in a longitudinal direction of the peripheral concaved groove portion 6'.

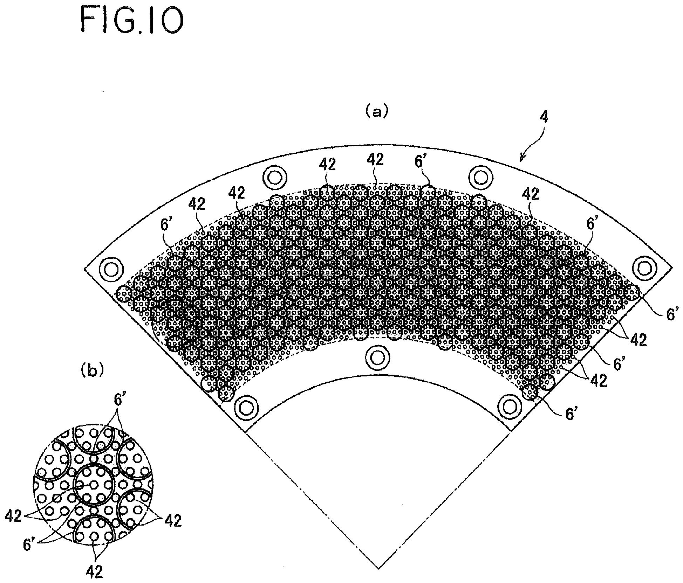

As shown in Figs. 10(a) and 10(b), for example, the peripheral concaved groove portion 6' is annularly formed in a plan view, and on the surface of the strainer 41, the plurality of strainer holes 42 is formed not only inside the peripheral concaved groove portion 6', but also outside the peripheral concaved groove portion 6'.

As a result, many strainer holes 42 can be provided, and the turbulent flow is generated not only inside the peripheral concaved groove portions 6', but also outside the peripheral concaved groove portions 6'. Namely, the turbulent flow area increases, and the disintegration of the paper material can be accelerated further.

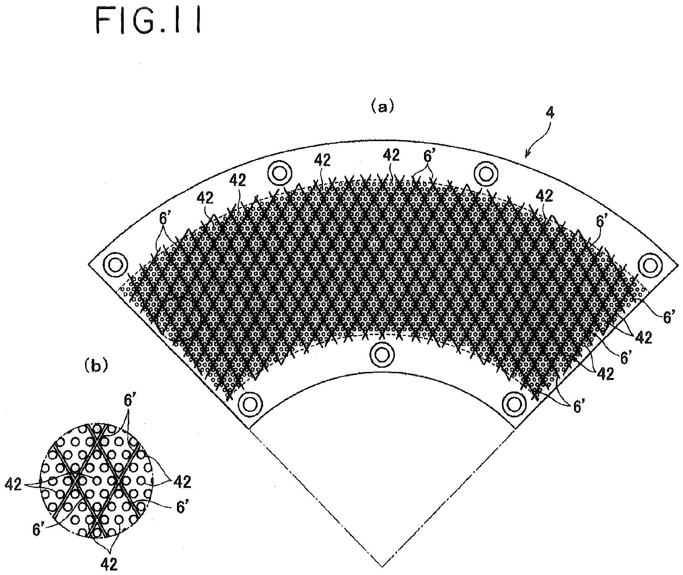

Incidentally, in the present embodiment, there is used the circle (see Figs. 9(a) to 9(d)) in the plan view; however, in the present invention, it is not limited to the circle, and there may be the oval or the rectangular shape. Also, as shown in Figs. 11(a) and 11(b), the peripheral concaved groove portions 6' may be formed by surrounding the peripheries of the strainer holes 42 with linear concaved grooves.

Also, the width crossing in the longitudinal direction of the groove of the peripheral concaved groove portion 6' is thinner than the peripheral length of the peripheral concaved groove portion 6'. The width of the peripheral concaved groove portion 6' has an appropriate value, and for example, the width of the peripheral concaved groove portion 6' is preferably between 0.5 mm and 10 mm, and more preferably around 2 mm.

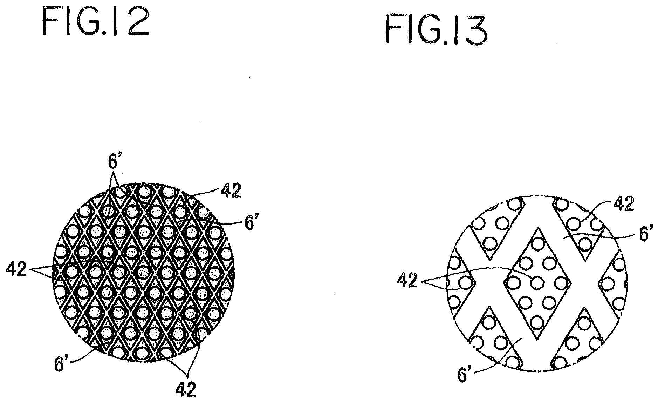

Incidentally, the width of the peripheral concaved groove portion 6' is smaller than the diameter of the strainer hole 42 (see Figs. 9(a) to 9(d), Figs. 11(a) and 11(b), and Fig. 12); however, in the present invention, it is not limited to the above, and as shown in Fig. 13, the width of the peripheral concaved groove portion 6' may be larger than the diameter of the strainer hole 42.

Also, the plurality of peripheral concaved groove portions 6' is formed so as to cause the turbulent flows near the peripheral concaved groove portions 6', and accelerate the disintegration of the paper material further.

Incidentally, in the present embodiment (Fig. 8 to Fig. 13), the case wherein the papermaking strainer 4 is adopted to the pulper has been explained; however, the papermaking strainer 4 of the present invention is not limited to the above, and can be applied to the foreign material separation apparatus for papermaking such as the screen and the like for processing the papermaking raw material including the not-yet-disintegrated piece and the foreign material (the metal piece, the stone, and the plastic piece) to obtain the finely selected useful fiber.

The foreign material separation apparatus for papermaking includes the flat-plate-shaped or cylindrical separator including the plurality of holes in proximity to the rotating rotary member, and separates the paper material passing through the holes from the foreign material which does not pass through. In the aforementioned embodiment, the rotary member is, for example, the rotor 3; the flat-plate-like separator is, for example, the strainer 41; and the cylindrical separator is, for example, the screen 2 having the cylindrical shape in the Japanese Patent No. 4909693.

In a case wherein the peripheral concaved groove portions 6' having the narrow width in the same manner as above are formed around the plurality of holes of the separator, and the peripheral concaved groove portions 6' having the narrow width are linearly formed, the width of the peripheral concaved groove portion is thinner than the length of the periphery of the peripheral concaved groove portion, or in a case wherein the peripheral concaved groove portion having the narrow width is formed in the approximately annular shape, the width of the peripheral concaved groove portion may be thinner than the length in the longitudinal direction of the approximately annular shape of the peripheral concaved groove portion.

Even in the aforementioned foreign material separation apparatus for papermaking, when the rotor crosses the peripheral concaved groove portions, the turbulent flow is generated, and the disintegration of the paper material can be accelerated by the many turbulent flows. Also, the plurality of holes is provided on the surface of the separator facing the rotor, and there is formed the plurality of peripheral concaved groove portions surrounding the peripheries of the holes with the concaved grooves so as to increase the crossing lengths between the rotor and the peripheral concaved groove portions more than the conventional technology. Also, the peripheral concaved groove portions are formed finely so as to increase the crossing frequencies relative to the rotor, and improve the disintegration property more than the conventional technology.

While the invention has been explained with reference to the specific embodiments of the invention, the explanation is illustrative and the invention is limited only by the appended claims.

## Claims

1. A papermaking strainer (4) for sieving a disintegrated paper material, comprising:
a plurality of strainer holes (42) passing through the strainer (4); and
a plurality of peripheral walls (6) protruding from a surface of the strainer to surround the plurality of strainer holes (42),
**characterized in that**
the plurality of peripheral walls (6) is attached to the surface of the strainer (4) by build-up welding, wherein the plurality of peripheral walls (6) is formed from a material having a hardness greater than that of the strainer (4).

2. The papermaking strainer according to claim 1, wherein each peripheral wall (6) of the plurality of peripheral walls (6) surrounds a periphery of each strainer hole (42) or some strainer holes (42) of the plurality of strainer holes (42).

3. The papermaking strainer according to claim 1, wherein the plurality of peripheral walls (6) has an annular shape, and
the plurality of strainer holes (42) is formed not only inside the peripheral walls (6) but outside the peripheral walls.

4. A manufacturing method of a papermaking strainer, comprising:
a boring step for boring a plurality of strainer holes (42) in a strainer (4); and
a peripheral-wall forming step, after the boring step, for forming a plurality of peripheral walls (6) protruding from a surface of the strainer(4);
the plurality of peripheral walls (6) is attached to the surface of the strainer (4) by build-up welding to surround at least one periphery of the plurality of strainer holes, and
the plurality of peripheral walls (6) is formed from a material having a hardness greater than that of the strainer (4) around the strainer holes (42).

5. A manufacturing method of a papermaking strainer, comprising:
a peripheral-wall forming step for forming a plurality of peripheral walls (6) protruding from a surface of a strainer (4); and
a boring step, after the peripheral-wall forming step, for boring at least one strainer hole (42) in the strainer (4) inside the plurality of peripheral walls while avoiding boring the peripheral walls (6) on the surface of the strainer (4);
the plurality of peripheral walls (6) is attached to the surface of the strainer (4) by build-up welding, and
the plurality of peripheral walls (6) is formed from a material having a hardness greater than that of the strainer (4) .

## Patentansprüche

1. Ein Papiermachereisieb (49 zum Sieben eines aufgelösten Papiermaterials, umfassend:
eine Vielzahl von Sieblöchern (42) die sich durch das Sieb (4) erstrecken; und
eine Vielzahl von peripheren Wänden (6), die von einer Oberfläche des Siebs hervorstehen und die Vielzahl an Sieblöchern (42) umgeben,
**dadurch gekennzeichnet, dass**
die Vielzahl von peripheren Wänden (6) durch Auftragsschweißen an der Oberfläche des Siebs befestigt ist, wobei die Vielzahl von peripheren Wänden (6) aus einem Material besteht, das eine höhere Härte hat als das des Siebs.

2. Das Papiermachereisieb gemäß Anspruch 1,
wobei jede periphere Wand (6) der Vielzahl von peripheren Wänden (6) eine Peripherie jedes Sieblochs (42) oder einige Sieblöcher (42) der Vielzahl von Sieblöchern (42) umgibt.

3. Das Papiermachereisieb gemäß Anspruch 1,
wobei die Vielzahl von Sieblöchern (42) eine ringförmige Form hat, und
die Vielzahl von Sieblöchern (42) nicht nur innerhalb der peripheren Wände (6), sondern außerhalb der peripheren Wände geformt ist.

4. Ein Herstellungsverfahren eines Papiermachereisiebs, umfassend:
einen Bohrungsschritt zum Bohren einer Vielzahl von Sieblöchern (42) in ein Sieb (4); und
einen Periphere-Wand-Formungsschritt, nach dem Bohrungsschritt, zum Formen einer Vielzahl von peripheren Wänden (6), die von einer Oberfläche des Siebs (4) hervorstehen;
die Vielzahl von peripheren Wänden (6) ist an der Oberfläche des Siebs (4) durch Auftragsschweißen befestigt, um zumindest eine Peripherie der Vielzahl von Sieblöchern zu umgeben, und
die Vielzahl von peripheren Wänden (6) ist aus einem Material geformt, das eine höhere Härte hat als das des Siebs (4) um die Sieblöcher.

5. Ein Herstellungsverfahren eines Papiermachereisiebs, umfassend:
einen Periphere-Wand-Formungsschritt zum Formen einer Vielzahl von peripheren Wänden (6), die von einer Oberfläche eines Siebs (4) hervorstehen; und
einen Bohrungsschritt, nach dem Periphere-Wand-Formungsschritt, zum Bohren zumindest eines Sieblochs (42) in dem Sieb (4) innerhalb der Vielzahl von peripheren Wänden während ein Anbohren der peripheren Wände (6) auf der Oberfläche des Siebs (4) vermieden wird;
die Vielzahl von peripheren Wänden (6) ist an der Oberfläche des Siebs (4) durch Auftragsschweißen befestigt, und
die Vielzahl von peripheren Wänden (6) ist aus einem Material gefertigt, das eine höhere Härte hat als das des Siebs (4).

## Revendications

1. Tamis de fabrication de papier (4) pour tamiser un matériau de papier désintégré, comprenant :
une pluralité de trous de tamis (42) traversant le tamis (4) ; et
une pluralité de parois périphériques (6) faisant saillie à partir d'une surface du tamis de façon à entourer la pluralité de trous de tamis (42),
**caractérisé en ce que**
la pluralité de parois périphériques (6) sont fixées à la surface du tamis (4) par chargement par soudure, la pluralité de parois périphériques (6) étant constituées par un matériau ayant une dureté supérieure à celle du tamis (4).

2. Tamis de fabrication de papier selon la revendication 1, dans lequel chaque paroi périphérique (6) de la pluralité de parois périphériques (6) entoure une périphérie de chaque trou de tamis (42) ou de certains trous de tamis (42) de la pluralité de trous de tamis (42) .

3. Tamis de fabrication de papier selon la revendication 1, dans lequel la pluralité de parois périphériques (6) ont une forme annulaire, et
la pluralité de trous de tamis (42) sont formés pas seulement à l'intérieur des parois périphériques (6), mais à l'extérieur des parois périphériques.

4. Procédé de fabrication d'un tamis de fabrication de papier, comprenant :
une étape de perçage pour percer une pluralité de trous de tamis (42) dans un tamis (4) ; et
une étape de formation de parois périphériques, après l'étape de perçage, pour former une pluralité de parois périphériques (6) faisant saillie à partir d'une surface du tamis (4) ;
la pluralité de parois périphériques (6) étant fixées à la surface du tamis (4) par chargement par soudure de façon à entourer au moins une périphérie de la pluralité de trous de tamis, et
la pluralité de parois périphériques (6) étant constituées par un matériau ayant une dureté supérieure à celle du tamis (4) autour des trous de tamis (42).

5. Procédé de fabrication d'un tamis de fabrication de papier, comprenant :
une étape de formation de parois périphériques pour former une pluralité de parois périphériques (6) faisant saillie à partir d'une surface d'un tamis (4) ; et
une étape de perçage, après l'étape de formation de parois périphériques, pour percer au moins un trou de tamis (42) dans le tamis (4) à l'intérieur de la pluralité de parois périphériques, tout en évitant de percer les parois périphériques (6) sur la surface du tamis (4) ;
la pluralité de parois périphériques (6) étant fixées à la surface du tamis (4) par chargement par soudure, et
la pluralité de parois périphériques (6) étant constituées par un matériau ayant une dureté supérieure à celle du tamis (4).
